(19) **Europäisches Patentamt / European Patent Office / Office européen des brevets**

(11) **EP 2 748 451 B1**

(12) **FASCICULE DE BREVET EUROPEEN**

(45) Date de publication et mention de la délivrance du brevet:
**24.02.2016 Bulletin 2016/08**

(21) Numéro de dépôt: **12751093.1**

(22) Date de dépôt: **31.07.2012**

(51) Int Cl.:
*F02D 41/30* (2006.01)     *F02D 41/00* (2006.01)

(86) Numéro de dépôt international:
**PCT/FR2012/051810**

(87) Numéro de publication internationale:
**WO 2013/026970 (28.02.2013 Gazette 2013/09)**

(54) **PROCÉDÉ ET SYSTÈME DE COMMANDE DU FONCTIONNEMENT D'UN MOTEUR DE VÉHICULE**

VERFAHREN UND SYSTEM ZUR STEUERUNG DES BETRIEBS EINES FAHRZEUGMOTORS

METHOD AND SYSTEM FOR CONTROLLING THE OPERATION OF A VEHICLE ENGINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.08.2011 FR 1157449**

(43) Date de publication de la demande:
**02.07.2014 Bulletin 2014/27**

(73) Titulaire: **Valeo Systèmes de Contrôle Moteur 95800 Cergy (FR)**

(72) Inventeurs:
• **COUSIN, Frédéric**
 **F-95210 Saint Gratien (FR)**
• **FOURNIGAULT, Damien**
 **F-95300 PONTOISE (FR)**
• **PIQUES, Jean-Denis**
 **F-95800 Cergy (FR)**
• **PAVLAUD, Marine**
 **F-78480 Verneuil Sur Seine (FR)**

(74) Mandataire: **Garcia, Christine**
 **Propriété Intellectuelle**
 **Valeo Systèmes de Contrôle Moteur**
 **14, avenue des Béguines**
 **95800 Cergy St Christophe (FR)**

(56) Documents cités:
EP-A1- 2 221 465     EP-A2- 1 617 065
WO-A2-2005/108763     DE-C1- 19 741 965

## Description

La présente invention concerne un procédé et un système de commande du fonctionnement d'un moteur de véhicule.

Le fonctionnement d'un moteur de véhicule est usuellement contrôlé et ajusté en temps réel par une unité de contrôle, notamment pour prendre en compte des instructions de conduite et des valeurs qui sont mesurées pour certaines caractéristiques de fonctionnement du moteur. Ces caractéristiques de fonctionnement du moteur peuvent être des températures de certains composants, une pression de collecteur, une pression de rampe commune, une teneur en oxygène des gaz d'échappement, etc.

L'unité de contrôle détermine alors des réglages de dispositifs de commande du moteur, pour obtenir un fonctionnement désiré du moteur. Pour cela, l'unité de contrôle utilise un modèle du moteur, ainsi qu'un modèle des dispositifs de commande du moteur, pour déterminer les réponses du moteur et des dispositifs de commande à des instructions qui sont produites par l'unité de contrôle elle-même. Un tel contrôle permet d'optimiser la consommation du moteur en carburant, ainsi que réduire les polluants qui sont présents dans les gaz d'échappement.

Les dispositifs de commande du moteur qui sont concernés comprennent notamment les circuits d'admission de gaz et de carburant.

Or les exigences croissantes en matière de réduction de consommation et de pollution nécessitent d'optimiser avec plus de précision le fonctionnement du moteur.

Par ailleurs, il est connu que les dispositifs de commande peuvent avoir des caractéristiques variables. De telles variations peuvent résulter de dispersions de fabrication, ou bien du vieillissement progressif de certains composants pendant la durée d'utilisation du moteur. Il apparaît alors nécessaire de prendre en compte ces variations des caractéristiques des composants pour obtenir une précision supérieure dans l'ajustement du fonctionnement du moteur. Par exemple, le document US 7,021,278 décrit une méthode pour prendre en compte des variations qui concernent un système d'injection de carburant. Le document EP 2 221 465 divulgue par ailleurs de calibrer un modèle des injecteurs, et de recalculer le modèle des dispositifs de commande du moteur en résolvant un système d'équations.

Mais de telles méthodes sont destinées à être mises en oeuvre lors de séances de réglage dédiées, pendant lesquelles le véhicule n'est pas disponible pour son utilisateur. En outre, des usures et des altérations de vieillissement de certains composants qui sont apparues depuis la dernière séance de réglage ne sont pas prises en compte pour ajuster le fonctionnement du moteur.

Dans ces conditions, un but de la présente invention consiste à améliorer encore l'ajustement du fonctionnement d'un moteur de véhicule.

En particulier, l'invention a pour but d'ajuster le fonctionnement du moteur en prenant en compte l'état des composants des circuits d'admission de gaz et de carburant, tel que cet état existe pendant le fonctionnement du moteur.

Un autre but de l'invention consiste à adapter le modèle qui est utilisé pour les circuits d'admission de gaz et de carburant, sans nécessiter l'immobilisation du véhicule.

Pour cela, l'invention propose un procédé de commande du fonctionnement d'un moteur de véhicule, suivant lequel le fonctionnement du moteur est ajusté en utilisant des valeurs d'entrée respectives pour des paramètres d'erreurs («error parameter» en anglais) d'un modèle de dispositifs de commande du moteur.

Le procédé comprend une détermination de valeurs actualisées des paramètres d'erreurs à partir de valeurs qui sont mesurées en phase de fonctionnement normal du moteur respectivement pour au moins deux caractéristiques du fonctionnement («operation feature» en anglais) du moteur.

La détermination des valeurs actualisées des paramètres d'erreurs est effectuée en utilisant une matrice de sensibilité qui est adaptée pour calculer des valeurs attribuées aux paramètres d'erreurs à partir d'un écart entre la valeur mesurée et une valeur de consigne pour chaque caractéristique de fonctionnement.

Les valeurs actualisées des paramètres d'erreurs sont alors utilisées comme nouvelles valeurs d'entrée pour ajuster le fonctionnement du moteur.

En outre :

- les dispositifs de commande du moteur pour lesquels les paramètres d'erreurs sont mis en oeuvre comprennent au moins les circuits d'admission de gaz et de carburant. Les caractéristiques de fonctionnement du moteur comprennent alors l'une au moins parmi une pression de collecteur du moteur et une teneur en oxygène d'un gaz d'échappement du moteur ; et

- certains des paramètres d'erreurs dont les valeurs actualisées sont utilisées pour ajuster le fonctionnement du moteur, concernent l'une au moins parmi une ouverture de vanne de gaz d'admission et des injecteurs du moteur.

Ainsi, l'invention permet d'adapter le modèle qui est utilisé pour les circuits d'admission de gaz et de carburant, en temps réel pendant le fonctionnement du moteur, pour prendre en compte des variations en cours de l'état de ces circuits. De cette façon, le modèle est adapté pendant l'utilisation du véhicule, sans nécessiter que celui-ci soit immobilisé pour une séance de réglage en garage.

Des améliorations progressives de l'invention peuvent être obtenues de la façon suivante :

- la détermination des valeurs actualisées des paramètres d'erreurs peut être répétée de manière itérative, et après chaque itération, les valeurs actualisées des paramètres d'erreurs qui ont été déterminées à cette itération peuvent ensuite être utilisées comme nouvelles valeurs d'entrée pour ajuster le fonctionnement du moteur ;

- la détermination des valeurs actualisées des paramètres d'erreurs peut comprendre la séquence d'étapes suivantes :

    /i/ une étape de mesure, lors de laquelle une nouvelle valeur est mesurée pour chaque caractéristique du fonctionnement du moteur ;

    /ii/ une étape de prédiction, lors de laquelle des estimations de nouvelles valeurs actualisées sont produites respectivement pour les paramètres d'erreurs, à partir de valeurs actualisées produites antérieurement pour les mêmes paramètres d'erreurs ; et

    /iii/ une étape d'actualisation, lors de laquelle de nouvelles valeurs actualisées des paramètres d'erreurs sont obtenues en combinant les estimations produites à l'étape /ii/ avec les nouvelles valeurs mesurées à l'étape /i/ ; et

- les valeurs actualisées des paramètres d'erreurs peuvent être déterminées en utilisant un filtre récursif de type Kalman. Dans ce cas, les nouvelles valeurs actualisées des paramètres d'erreurs sont obtenues à chaque nouvelle itération à partir des valeurs actualisées des mêmes paramètres d'erreurs qui ont été obtenues à la seule itération juste antérieure, combinées avec les valeurs mesurées à la nouvelle itération pour les caractéristiques de fonctionnement, et avec des données statistiques calculées à l'itération juste antérieure et à la nouvelle itération, en utilisant la matrice de sensibilité.

Un avantage de l'utilisation d'un tel filtre récursif de type Kalman réside dans la suppression de la nécessité d'inverser la matrice de sensibilité. En effet, la matrice de sensibilité peut être de dimension importante, rendant complexe et long le calcul de sa matrice inverse. En supprimant cette inversion de matrice de grande dimension, il est possible de déterminer les nouvelles valeurs pour les paramètres d'erreurs avec une fréquence d'actualisation qui est supérieure.

De façon générale, les valeurs actualisées des paramètres d'erreurs peuvent être enregistrées dans un dispositif de stockage à mémoire non volatile et programmable. Ainsi, elles sont disponibles pour être réutilisées ultérieurement, notamment à la reprise du fonctionnement du moteur après une durée d'arrêt. Elles peuvent aussi être réutilisées lorsque les valeurs qui sont nouvellement obtenues pour les paramètres d'erreurs aboutissent à des écarts pour les caractéristiques de fonctionnement du moteur, entre valeurs mesurées et valeurs de consignes, qui ne satisfont pas un critère de vraisemblance prédéterminé.

Lorsqu'un filtre récursif de type Kalman est utilisé pour déterminer les valeurs des paramètres d'erreurs, des valeurs actualisées de covariances qui sont associées aux valeurs actualisées des paramètres d'erreurs, peuvent être enregistrées avec ces dernières. Ainsi, ces valeurs de covariances sont disponibles avec les valeurs correspondantes des paramètres d'erreurs pour une réutilisation ultérieure.

L'invention concerne aussi un système de commande du fonctionnement d'un moteur de véhicule, qui comprend :

- une unité de contrôle, adaptée pour ajuster le fonctionnement du moteur à partir de valeurs d'entrée qui sont reçues respectivement pour des paramètres d'erreurs d'un modèle des dispositifs de commande du moteur, ceux-ci comprenant au moins les circuits d'admission de gaz et de carburant,

- une unité de calcul, adaptée pour déterminer des valeurs respectives des paramètres d'erreurs à partir de valeurs mesurées en phase de fonctionnement normal du moteur respectivement pour au moins deux caractéristiques de fonctionnement du moteur, en utilisant une matrice de sensibilité pour calculer des valeurs qui sont attribuées aux paramètres d'erreurs à partir d'un écart entre la valeur mesurée et une valeur de consigne, respectivement pour chaque caractéristique de fonctionnement, les caractéristiques de fonctionnement comprenant l'une au moins parmi une pression de collecteur du moteur et une teneur en oxygène d'un gaz d'échappement du moteur, et

- des moyens de communication, adaptés pour transmettre à l'unité de contrôle les valeurs déterminées par l'unité de calcul pour les paramètres d'erreurs, de façon à produire une actualisation des valeurs d'entrée utilisées par l'unité de contrôle pour les paramètres d'erreurs.

En outre, l'unité de calcul et l'unité de contrôle sont adaptées pour que certains des paramètres d'erreurs dont les valeurs actualisées sont utilisées pour ajuster le fonctionnement du moteur, concernent l'une au moins parmi une ouverture de vanne de gaz d'admission et des injecteurs du moteur.

Un tel système peut être adapté pour mettre en oeuvre un procédé tel que décrit précédemment, pour commander le fonctionnement d'un moteur de véhicule.

L'invention propose enfin un véhicule à moteur qui comprend un tel système de commande, avec des moyens de mesure adaptés pour produire les valeurs qui sont mesurées respectivement pour les caractéristiques de fonctionnement du moteur.

D'autres particularités et avantages de la présente invention apparaîtront dans la description ci-après d'exemples de mise en oeuvre non limitatifs, en référence aux dessins annexés, dans lesquels :

- la figure 1 est un diagramme synoptique d'un système selon l'invention, pour commander le fonctionnement d'un moteur de véhicule ; et

- la figure 2 reproduit un exemple de matrice de sensibilité pouvant être utilisée pour mettre en oeuvre l'invention.

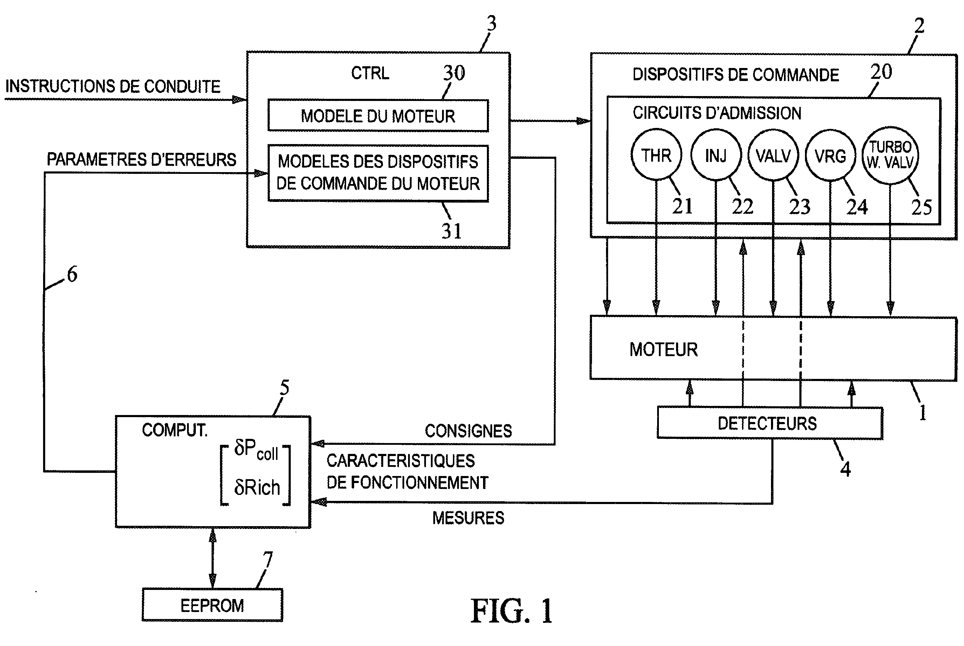

Les références numériques qui sont indiquées dans la figure 1 ont les significations suivantes :

1 : le moteur, du type à combustion interne pour véhicule ;

2 : des dispositifs de commande du moteur 1, y compris les circuits d'admission 20 en gaz et en carburant, et pouvant comprendre en outre d'autres circuits de commande, notamment des circuits de commande électrique ;

3 : une unité de contrôle notée CTRL, pour transmettre des commandes d'ajustement aux dispositifs de commande 2, notamment en fonction d'instructions de conduite qui sont reçues en entrée par cette unité de contrôle ;

4 : des moyens de mesure, y compris des détecteurs, pour produire des valeurs qui sont mesurées respectivement pour différentes caractéristiques de fonctionnement du moteur ;

5 : une unité de calcul notée COMPUT., pour déterminer des valeurs de paramètres d'erreurs concernant les circuits d'admission 20 ;

6 : une liaison de communication, pour transmettre à l'unité de contrôle 3 des valeurs déterminées par l'unité de calcul 4 pour les paramètres d'erreurs ; et

7 : un dispositif de stockage à mémoire non volatile et programmable, pouvant être du type EEPROM pour «electrically-erasable and programmable read-only memory» en anglais.

L'unité de contrôle 3, l'unité de calcul 5 et la liaison de communication 6 constituent ensemble un système conforme à l'invention pour commander le fonctionnement du moteur 1.

De façon connue, l'unité de contrôle 3 utilise un modèle 30 du fonctionnement du moteur 1, ainsi que des modèles 31 des dispositifs de commande 2, pour déterminer les commandes d'ajustement qui sont transmises aux dispositifs de commande 2. De tels modèles sont supposés connus de l'Homme du métier, si bien qu'il n'est pas nécessaire de les répéter ici. Ils produisent simultanément des valeurs de consignes pour certaines caractéristiques du fonctionnement du moteur 1. Ces valeurs de consignes sont destinées à être comparées à des valeurs qui sont mesurées par les détecteurs 4 pour ces mêmes caractéristiques. De cette façon, une boucle de rétroaction est constituée, qui permet de contrôler que le fonctionnement du moteur 1 correspond à celui qui est déterminé par l'unité 3.

Les détecteurs 4 peuvent être disposés pour effectuer des mesures de caractéristiques de fonctionnement du moteur 1, aussi bien à l'intérieur du moteur 1 lui-même que dans les dispositifs de commande 2. Ainsi, ces caractéristiques de fonctionnement du moteur qui sont à la fois déterminées par l'unité de contrôle 3 et mesurées par les détecteurs 4 peuvent comprendre au moins une pression du collecteur d'admission ou une teneur en oxygène dans les gaz d'échappement du moteur 1, ou une pression de suralimentation d'un turbocompresseur lorsque le moteur 1 est muni d'un tel turbocompresseur. De préférence, plusieurs de ces caractéristiques sont utilisées simultanément.

De façon connue, les circuits d'admission 20 comprennent une vanne-papillon 21, notée THR pour «throttle» en anglais, pour ajuster l'admission de gaz dans le moteur 1, des injecteurs 22 notés INJ, des soupapes d'admission et d'échappement 23, notées VALV pour «valve» en anglais, une vanne de recirculation de gaz d'échappement 24 notée VRG, et éventuellement une vanne de décharge du turbocompresseur 25, notée TURBO W. VALV pour «turbo waste valve» en anglais. Eventuellement, les injecteurs 22 peuvent réaliser une injection directe du carburant.

Les modèles 31 qui sont utilisés par l'unité de contrôle 3 pour les dispositifs de commande 2 comprennent des données numériques qui caractérisent ces dispositifs et leur fonctionnement. Or ces dispositifs sont susceptibles de présenter des dispersions de fabrication, ou des évolutions dues au vieillissement ou à leur usure progressive, etc. Les données numériques qui sont relatives à ces dispositifs sont donc susceptibles de varier. Or des valeurs inappropriées qui seraient utilisées par l'unité de contrôle 3 pourraient provoquer un ajustement inadéquat du fonctionnement du moteur 1, ou bien ralentir la convergence du fonctionnement du moteur vers le régime qui est commandé par l'unité 3. Il en résulte alors un régime de fonctionnement inapproprié pour le moteur 1, pouvant provoquer une consommation de carburant et une pollution inutiles.

Toutefois, il serait possible d'utiliser des données numériques qui soient adaptées initialement aux dispositifs de commande réellement utilisés dans le véhicule, puis de les actualiser périodiquement. De telles actualisations seraient effectuées lors de séances d'immobilisation du véhicule, à partir de mesures pour caractériser le vieillissement et/ou l'usure des dispositifs de commande. Mais un tel mode opératoire requerrait des immobilisations périodiques du véhicule, et les données numériques utilisées ne seraient pas adaptées pendant toute la durée entre deux actualisations.

L'invention surmonte cette difficulté en actualisant les données numériques des modèles qui sont utilisés par l'unité de contrôle 3 pour les dispositifs de commande 2, d'une façon qui est permanente pendant l'utilisation normale du véhicule.

Pour cela, l'unité de calcul 5 reçoit d'une part les valeurs de consignes qui sont produites par l'unité de contrôle 3 pour une sélection de caractéristiques de fonctionnement du moteur 1, et d'autre part les valeurs qui sont mesurées par les détecteurs 4 pour ces mêmes caractéristiques. Ces valeurs de consignes et mesurées sont relatives à de mêmes instants du fonctionnement du moteur 1, et l'unité 5 calcule un écart entre la valeur mesurée et la valeur de consigne, pour chaque caractéristique de fonctionnement du moteur qui est utilisée. L'unité 5 déduit alors de ces écarts des valeurs de paramètres d'erreurs qui concernent certaines données numériques des dispositifs de commande 2, qui sont utilisées par l'unité de contrôle 3. Ces valeurs de paramètres d'erreurs sont transmises de l'unité 5 à l'unité 3 par la liaison 6, pour actualiser les données du modèle 31.

Les paramètres d'erreurs qui sont ainsi actualisés selon l'invention concernent en premier lieu la vanne-papillon 21 et les injecteurs 22, puis optionnellement avec des priorités décroissantes : les soupapes 23, la vanne de recirculation 24, la vanne de décharge du turbocompresseur 25, puis d'autres dispositifs de commande éventuellement.

Ainsi, au moins un des paramètres d'erreurs dont les valeurs actualisées sont utilisées pour ajuster le fonctionnement du moteur, peut concerner une distribution de soupapes d'admission et/ou d'échappement du moteur, et/ou être un paramètre de soupape de décharge du turbocompresseur, en plus des paramètres de la vanne-papillon et des injecteurs. Dans des mises en oeuvre préférées de l'invention, au moins un de ces paramètres d'erreurs est sélectionné parmi :

-   un paramètre de section d'ouverture de la vanne-papillon,

-   un temps mort d'injecteur,

-   un débit d'injecteur,

-   un gain d'injecteur par rapport à un écart de pression d'injection,

-   un angle d'ouverture variable des soupapes d'admission du moteur,

-   un angle de fermeture variable des soupapes d'échappement du moteur,

-   un paramètre d'actionneur adapté pour modifier un angle d'ouverture et/ou une course de levée des soupapes, et

-   un décalage de section efficace d'une vanne de recirculation d'une partie des gaz d'échappement du moteur.

Le cas échéant, certains des paramètres d'erreurs peuvent concerner une dispersion d'injecteurs directs du moteur.

D'une façon qui est aussi connue, les écarts entre valeurs mesurées et de consignes pour les caractéristiques du fonctionnement du moteur peuvent être reliés aux valeurs des paramètres d'erreurs par une équation matricielle. Ainsi, un vecteur des écarts pour les caractéristiques de fonctionnement utilisées peut théoriquement être calculé en multipliant une matrice de sensibilité notée C, par un vecteur de valeurs de paramètres d'erreurs. Par exemple, la matrice de sensibilité C peut être adaptée pour calculer les paramètres d'erreurs à partir des écarts respectifs d'une au moins parmi la pression de collecteur, la teneur en oxygène dans les gaz d'échappement et une pression de suralimentation du turbocompresseur. L'unité de calcul 5 détermine ainsi les valeurs des paramètres d'erreurs à partir des écarts des caractéristiques de fonctionnement du moteur.

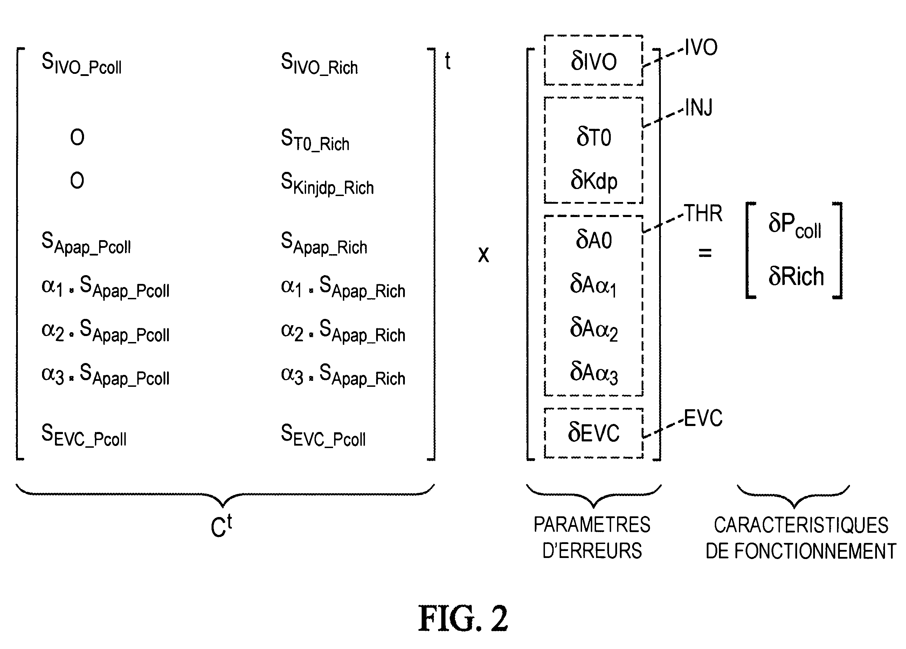

A titre d'illustration, la figure 2 reproduit un exemple de matrice de sensibilité C lorsque le moteur 1 est équipé d'une distribution variable, désignée par «variable valve timing» en anglais. Cette matrice C est reproduite sous la forme de sa matrice transposée $C^t$, et permet de calculer les paramètres d'erreurs à partir des écarts respectifs de la pression de collecteur et de la teneur en oxygène dans les gaz d'échappement. La pression de collecteur est notée $P_{coll}$, et la teneur en oxygène dans les gaz d'échappement, aussi appelée richesse, est notée Rich. Les écarts entre les valeurs mesurées par les détecteurs 4 et les valeurs de consignes produites par l'unité de contrôle 3 sont donc notés $\delta P_{coll}$ et $\delta rich$, respectivement. Les paramètres d'erreurs utilisés peuvent alors être :

   pour la vanne-papillon 21 :

      $\delta A0$ : l'écart de section dans la position d'ouverture minimale ; et

      $\delta A\alpha_1$, $\delta A\alpha_2$, et $\delta A\alpha_3$: les valeurs de pente successives pour la courbe d'ouverture de la vanne-papillon ;

   pour les injecteurs 22 :

      $\delta T0$ : le temps mort des injecteurs ; et

      $\delta Kdp$ : le gain des injecteurs en fonction de l'écart de pression d'injection ;

pour le système de distribution variable :

δIVO : l'angle d'ouverture d'amission («intake valve opening angle» en anglais) ; et

δEVC : l'angle de fermeture d'échappement («exhaust valve closing angle» en anglais).

Les coefficients de la matrice de sensibilité C sont alors, pour l'écart de richesse δRich :

$S_{Apap\_Rich}$ pour la variation de la richesse en fonction de l'écart de section d'ouverture minimale δA0 de la vanne-papillon ;

$α1·S_{Apap\_Rich}$, $α2·S_{Apap\_Rich}$ et $α3·S_{Apap\_Rich}$ pour les variations de la richesse en fonction des valeurs de pente la courbe d'ouverture de la vanne-papillon $δAα_1$, $δAα_2$, et $δAα_3$, respectivement ;

$S_{T0-Rich}$ pour la variation de la richesse en fonction du temps mort d'ouverture δT0 des injecteurs ;

$S_{Kinjdp\_Rich}$ pour la variation de la richesse en fonction du gain δKdp des injecteurs par rapport à l'écart de pression d'injection ; et

$S_{IVO-Rich}$ et $S_{EVC\_Rich}$ pour les variations de la richesse en fonction des valeurs de l'angle d'ouverture d'admission δIVO et de l'angle de fermeture d'échappement δEVC, respectivement.

Ces coefficients pour l'écart de richesse forment la seconde colonne de la matrice $C^t$. Des coefficients similaires caractérisent les variations de l'écart de pression de collecteur en fonction des mêmes paramètres d'erreurs, et forment la première colonne de la matrice $C^t$. Toutefois, l'écart de pression de collecteur δPcoll est indépendant des paramètres d'injecteurs : $S_{T0-Pcoll}$ et $S_{Kinjdp\_Pcoll}$ sont nuls.

Tous ces coefficients de la matrice de sensibilité C peuvent être déterminés d'une façon qui est connue de l'Homme du métier, notamment en adoptant successivement des conditions de fonctionnement du moteur 1 qui donnent accès séparément à des sous-ensembles de ces coefficients. Ils peuvent alors être enregistrés dans le dispositif de stockage 7.

Dans des variantes de mise en oeuvre de l'invention, certains des paramètres d'erreurs qui sont pris en compte peuvent être différents de ceux qui viennent d'être décrits. Par exemple, lorsque le moteur 1 n'est pas équipé d'une distribution variable, les paramètres δIVO et δEVC peuvent être remplacés respectivement par un écart de gain δKinj des injecteurs 22 en fonction du temps d'ouverture, et un décalage de section d'ouverture de la vanne VRG 24. Plus précisément, le gain δKinj est le débit de carburant qui est introduit par chaque injecteur 22, en fonction de sa durée d'ouverture après le temps mort T0.

Evidemment, l'invention peut être appliquée à toutes les combinaisons de paramètres d'erreurs, en fonction des dispositifs de commande dont est équipé le moteur 1. D'une façon générale, le nombre de colonnes de la matrice de sensibilité transposée $C^t$ est le nombre de caractéristiques de fonctionnement du moteur qui sont mesurées, et le nombre de lignes est le nombre de paramètres d'erreurs dont les valeurs sont actualisées selon l'invention.

On décrit maintenant une mise en oeuvre préférée de l'invention qui utilise un filtre de Kalman. Une telle méthode procède de façon itérative, ou récursive, à des évaluations répétées de paramètres. Chaque nouvelle évaluation est obtenue en corrigeant le résultat de l'évaluation précédente pour prendre en compte des résultats de nouvelles mesures, indicatives d'une évolution des valeurs des paramètres. La théorie du filtre de Kalman est supposée connue, si bien qu'il est suffisant d'exposer ici son application simplifiée à l'invention.

L'entier naturel k désigne le numéro d'itération, $EP_{k/k-1}$ désigne une prédiction qui est faite à l'itération k pour le vecteur des paramètres d'erreurs à partir de l'estimation obtenue à l'itération précédente k-1, et $EP_{k/k}$ désigne l'estimation du vecteur des paramètres d'erreurs qui est finalement obtenue à l'itération k. Cette estimation $EP_{k/k}$ est obtenue à partir de la prédiction $EP_{k/k-1}$ et d'une correction qui tient compte des valeurs mesurées à l'itération k pour les caractéristiques du fonctionnement du moteur, notées $OM_k$. Dans le cas particulier d'un régime continu du fonctionnement du moteur, l'itération k comporte les trois étapes successives suivantes :

- une nouvelle mesure des caractéristiques de fonctionnement $OM_k$ ;

- une étape de prédiction, qui se réduit à adopter en tant que nouvelles valeurs prédites les valeurs estimées juste précédemment pour les paramètres d'erreurs : $EP_{k/k-1} = EP_{k-1/k-1}$. En outre, l'étape de prédiction consiste à calculer une matrice de valeurs prédites de covariances des paramètres d'erreurs, sous la forme : $P_{k/k-1} = P_{k-1/k-1} + Q_{k-1}$, où $Q_{k-1}$ est la matrice de covariance du bruit de modèle ; puis

- une étape d'estimation, lors de laquelle sont calculées successivement :

un vecteur dit d'innovation, $Innov_k$, égal à $OM_k$ - C x $EP_{k/k-1}$, où C est la matrice de sensibilité actuelle ;

une matrice de covariance d'innovation, $P_{Innov\_k}$, égale à C x $P_{k/k}·_1$ x $C^t$ + $R_k$, où $R_k$ est la matrice de covariance du bruit des mesures de la pression de collecteur $P_{coll}$ et de la teneur en oxygène Rich dans les gaz d'échappement ;

un opérateur de gain de Kalman, $K_k$, égal à $P_{k/k-1}$ x $C^t$ x $P_{Innov\_k}^{-1}$

les nouvelles valeurs estimées pour les paramètres d'erreurs :

$$EP_{k/k} = EP_{k/k-1} + K_k \text{ x Innov}_k \; ;$$

et la nouvelle matrice des valeurs estimées de covariances des paramètres d'erreurs: $P_{k/k} = (I - K_k \text{ x C}) \text{ x } P_{k/k-1}$, où I désigne la matrice d'identité.

Ainsi, chaque itération ne met en oeuvre que des opérations simples de combinaisons linéaires, en plus de l'inversion de la matrice de covariance d'innovation $P_{Innov\_k}$ qui est une matrice 2x2 dans l'exemple considéré. De cette façon, le temps d'exécution de chaque itération peut être court, si bien que l'invention permet une actualisation très rapide des valeurs des paramètres d'erreurs en temps réel pendant le fonctionnement du moteur.

Grâce à l'utilisation du filtre de Kalman, les valeurs des paramètres d'erreurs qui ont été obtenues à la seule itération k-1 sont suffisantes pour exécuter l'itération suivante k. Les valeurs qui sont obtenues à chaque itération sont alors enregistrées dans le dispositif de stockage 7 en remplacement des valeurs qui ont été obtenues à l'itération précédente.

De préférence, les nouvelles valeurs des paramètres d'erreurs ne sont transmises à l'unité de contrôle 3 que si aucune modification n'est détectée pour le régime de fonctionnement du moteur 1. Si de telles modifications sont détectées, les valeurs qui ont été obtenues pour les paramètres d'erreurs à l'itération pendant laquelle le changement de régime est survenu, peuvent être abandonnées.

Des mises en oeuvre plus complètes du filtre de Kalman peuvent aussi être appliquées à l'invention, qui permettent de reprendre des valeurs estimées pour les paramètres d'erreurs même si un changement du régime du moteur est intervenu. Pour cela, l'étape de prédiction est adaptée pour prendre en compte ce changement de régime. L'Homme du métier pourra se reporter à la théorie générale du filtre de Kalman, pour le principe d'une telle adaptation.

Selon un perfectionnement de l'invention, les valeurs actualisées des paramètres d'erreurs peuvent n'être utilisées comme nouvelles valeurs d'entrée pour ajuster le fonctionnement du moteur que si un critère de vraisemblance est satisfait pour les caractéristiques de fonctionnement. Si ce critère de vraisemblance n'est pas satisfait, alors les valeurs actualisées ne sont pas utilisées comme nouvelles valeurs d'entrée pour ajuster le fonctionnement du moteur, et la matrice de sensibilité peut être déterminée à nouveau. Une limite supérieure pour l'écart entre valeur de consigne et valeur mesurée, pour chaque caractéristique du fonctionnement du moteur, est un exemple de critère de vraisemblance. Alternativement ou en combinaison, le critère de vraisemblance peut aussi comprendre une limite supérieure pour chaque paramètre d'erreur. De cette façon, des comportements divergents du filtre de Kalman sont détectés et arrêtés.

D'une façon générale, selon un perfectionnement supplémentaire de l'invention, chaque valeur réelle qui est mesurée pour une caractéristique de fonctionnement du moteur, peut être une moyenne de plusieurs résultats de mesures qui sont réalisées successivement pendant une période de fonctionnement stable du moteur. Les valeurs moyennes de mesures qui sont ainsi utilisées présentent des dispersions de bruit de mesure qui sont réduites. Avantageusement, la matrice de sensibilité est elle-même déterminée à partir de valeurs numériques des caractéristiques de fonctionnement qui ont été obtenues pour des fonctionnements stables du moteur.

**Revendications**

**1.** Procédé de commande du fonctionnement d'un moteur de véhicule (1), suivant lequel le fonctionnement du moteur est ajusté en utilisant des valeurs d'entrée respectives pour des paramètres d'erreurs d'un modèle (31) de dispositifs (2) de commande du moteur, comprenant au moins des circuits (20) d'admission de gaz et de carburant,

le procédé comprenant une détermination de valeurs actualisées des paramètres d'erreurs à partir de valeurs mesurées en phase de fonctionnement normal du moteur respectivement pour au moins deux caractéristiques du fonctionnement du moteur, les dites caractéristiques de fonctionnement comprenant l'une au moins parmi une pression de collecteur du moteur et une teneur en oxygène d'un gaz d'échappement dudit moteur,

ladite détermination étant effectuée en utilisant une matrice de sensibilité adaptée pour calculer des valeurs attribuées aux paramètres d'erreurs à partir d'un écart entre la valeur mesurée et une valeur de consigne pour chaque caractéristique de fonctionnement,

les valeurs actualisées des paramètres d'erreurs étant utilisées comme nouvelles valeurs d'entrée pour ajuster le fonctionnement du moteur,

procédé suivant lequel certains des paramètres d'erreurs dont les valeurs actualisées sont utilisées pour ajuster le fonctionnement du moteur, concernent l'une au moins parmi une ouverture de vanne (21) de gaz d'admission et des injecteurs (22) du moteur.

**2.** Procédé selon la revendication 1, suivant lequel la détermination des valeurs actualisées des paramètres d'erreurs est répétée de manière itérative, et après chaque itération, les valeurs actualisées des paramètres d'erreurs qui ont été déterminées à ladite itération sont ensuite utilisées comme nouvelles valeurs d'entrée pour ajuster le fonctionnement du moteur.

3.  Procédé selon la revendication 2, suivant lequel la détermination des valeurs actualisées des paramètres d'erreurs comprend la séquence d'étapes suivantes :

    /i/ une étape de mesure, lors de laquelle une nouvelle valeur est mesurée pour chaque caractéristique du fonctionnement du moteur ;
    /ii/ une étape de prédiction, lors de laquelle des estimations de nouvelles valeurs actualisées sont produites respectivement pour les paramètres d'erreurs, à partir de valeurs actualisées produites antérieurement pour les dits paramètres d'erreurs ; et
    /iii/ une étape d'actualisation, lors de laquelle de nouvelles valeurs actualisées des paramètres d'erreurs sont obtenues en combinant les estimations produites à l'étape /ii/ avec les nouvelles valeurs mesurées à l'étape /i/.

4.  Procédé selon la revendication 3, suivant lequel les valeurs actualisées des paramètres d'erreurs sont déterminées en utilisant un filtre récursif de type Kalman, les nouvelles valeurs actualisées des paramètres d'erreurs étant obtenues à chaque nouvelle itération à partir des valeurs actualisées desdits paramètres d'erreurs qui ont été obtenues à la seule itération juste antérieure, combinées avec les valeurs mesurées à ladite nouvelle itération pour les caractéristiques de fonctionnement, et avec des données statistiques calculées à ladite itération juste antérieure et à ladite nouvelle itération, en utilisant la matrice de sensibilité.

5.  Procédé selon l'une quelconque des revendications précédentes, suivant lequel les valeurs actualisées des paramètres d'erreurs sont enregistrées dans un dispositif (7) de stockage à mémoire non volatile et programmable.

6.  Procédé selon les revendications 4 et 5, suivant lequel des valeurs actualisées de covariances qui sont associées aux valeurs actualisées des paramètres d'erreurs, sont enregistrées avec les dites valeurs actualisées des paramètres d'erreurs.

7.  Procédé selon l'une quelconque des revendications précédentes, suivant lequel au moins un des paramètres d'erreurs dont les valeurs actualisées sont utilisées pour ajuster le fonctionnement du moteur, concerne en outre une distribution de soupapes (23) d'admission et/ou d'échappement du moteur.

8.  Procédé selon l'une quelconque des revendications précédentes, suivant lequel au moins un des paramètres d'erreurs dont les valeurs actualisées sont utilisées pour ajuster le fonctionnement du moteur est sélectionné parmi :

    - un paramètre de section d'ouverture d'une vanne-papillon (21) d'admission d'air du moteur,
    - un temps mort d'injecteur (22),
    - un débit d'injecteur (22),
    - un gain d'injecteur par rapport à un écart de pression d'injection (22),
    - un angle d'ouverture variable des soupapes (23) d'admission du moteur,
    - un angle de fermeture variable des soupapes (23) d'échappement du moteur,
    - un paramètre d'actionneur adapté pour modifier un angle d'ouverture et/ou une course de levée des soupapes, et
    - un décalage de section efficace d'une vanne (24) de recirculation d'une partie des gaz d'échappement du moteur.

9.  Procédé selon l'une quelconque des revendications précédentes, suivant lequel certains des paramètres d'erreurs dont les valeurs actualisées sont utilisées pour ajuster le fonctionnement du moteur, concernent une dispersion d'injecteurs directs du moteur.

10.  Procédé selon l'une quelconque des revendications précédentes, suivant lequel le moteur est muni d'un turbocompresseur, avec au moins un autre des paramètres d'erreurs dont les valeurs actualisées sont utilisées pour ajuster le fonctionnement du moteur qui est un paramètre de soupape (25) de décharge du turbocompresseur.

11.  Procédé selon la revendication 10, suivant lequel la matrice de sensibilité est adaptée pour calculer les valeurs attribuées aux paramètres d'erreurs à partir des écarts respectifs d'une au moins parmi la pression de collecteur, la teneur en oxygène du gaz d'échappement et une pression de suralimentation du turbocompresseur.

12.  Procédé selon l'une quelconque des revendications précédentes, suivant lequel chaque valeur réelle mesurée est une moyenne de plusieurs résultats de mesures réalisées successivement pendant une période de fonctionnement stable du moteur.

13.  Procédé selon la revendication 12, suivant lequel la matrice de sensibilité est déterminée à partir de valeurs numériques des caractéristiques de fonctionnement obtenues pour des fonctionnements stables du moteur.

**14.** Procédé selon la revendication 13, suivant lequel les valeurs actualisées des paramètres d'erreurs sont utilisées comme nouvelles valeurs d'entrée pour ajuster le fonctionnement du moteur si un critère de vraisemblance est satisfait pour les caractéristiques de fonctionnement, et

si le critère de vraisemblance n'est pas satisfait, alors lesdites valeurs actualisées ne sont pas utilisées comme nouvelles valeurs d'entrée pour ajuster le fonctionnement du moteur, et la matrice de sensibilité est déterminée à nouveau.

**15.** Système de commande du fonctionnement d'un moteur (1) de véhicule, comprenant :

- une unité de contrôle (3), adaptée pour ajuster le fonctionnement du moteur à partir de valeurs d'entrée reçues respectivement pour des paramètres d'erreurs d'un modèle de dispositifs de commande du moteur, comprenant au moins les circuits d'admission de gaz et de carburant,

- une unité de calcul (5), adaptée pour déterminer des valeurs respectives des paramètres d'erreurs à partir de valeurs mesurées en phase de fonctionnement normal du moteur respectivement pour au moins deux caractéristiques de fonctionnement du moteur, en utilisant une matrice de sensibilité pour calculer des valeurs attribuées aux paramètres d'erreurs à partir d'un écart entre la valeur mesurée et une valeur de consigne, respectivement pour chaque caractéristique de fonctionnement, les dites caractéristiques de fonctionnement comprenant l'une au moins parmi une pression de collecteur du moteur et une teneur en oxygène d'un gaz d'échappement dudit moteur, et

- des moyens de communication (6), adaptés pour transmettre à l'unité de contrôle les valeurs déterminées par l'unité de calcul pour les paramètres d'erreurs, de façon à produire une actualisation des valeurs d'entrée utilisées par ladite unité de contrôle pour les dits paramètres d'erreurs,

l'unité de calcul et l'unité de contrôle étant adaptées pour que certains des paramètres d'erreurs dont les valeurs actualisées sont utilisées pour ajuster le fonctionnement du moteur, concernent l'une au moins parmi une ouverture de vanne (21) de gaz d'admission et des injecteurs (22) du moteur.

**16.** Système selon la revendication 15, adapté pour mettre en oeuvre un procédé selon l'une quelconque des revendications 1 à 14.

**17.** Véhicule à moteur comprenant :

- le moteur (1) ;

- des dispositifs (2) de commande du moteur, comprenant au moins des circuits (20) d'admission de gaz et de carburant ;

- un système de commande d'un fonctionnement du moteur (3, 5, 6), ledit système étant conforme à la revendication 15 ou 16 ; et

- des moyens de mesure (4) adaptés pour produire des valeurs mesurées respectivement pour les caractéristiques de fonctionnement du moteur.

**Patentansprüche**

**1.** Verfahren zur Steuerung des Betriebs eines Fahrzeugmotors (1), gemäß dem der Betrieb des Motors eingestellt wird, indem Eingangswerte für Fehlerparameter eines Modells (31) von Steuervorrichtungen (2) des Motors verwendet werden, das mindestens Ansaugsysteme (20) für Gas und Kraftstoff enthält, wobei das Verfahren eine Bestimmung von aktualisierten Werten der Fehlerparameter ausgehend von Werten enthält, die in der normalen Betriebsphase des Motors für mindestens zwei Merkmale des Betriebs des Motors gemessen werden, wobei die Betriebsmerkmale mindestens eines von einem Krümmerdruck des Motors und einem Sauerstoffgehalt eines Abgases des Motors enthalten, wobei die Bestimmung unter Verwendung einer Empfindlichkeitsmatrix durchgeführt wird, die geeignet ist, um den Fehlerparametern zugeteilte Werte ausgehend von einer Abweichung zwischen dem gemessenen Wert und einem Sollwert für jedes Betriebsmerkmal zu berechnen, wobei die aktualisierten Werte der Fehlerparameter als neue Eingangswerte verwendet werden, um den Betrieb des Motors einzustellen, Verfahren, gemäß dem bestimmte der Fehlerparameter, deren aktualisierte Werte zur Einstellung des Betriebs des Motors verwendet werden, mindestens eines unter einer Ansauggas-Ventilöffnung (21) und den Einspritzventilen (22) des Motors betreffen.

**2.** Verfahren nach Anspruch 1, gemäß dem die Bestimmung der aktualisierten Werte der Fehlerparameter iterativ wiederholt wird, und nach jeder Iteration die aktualisierten Werte der Fehlerparameter, die bei der Iteration bestimmt wurden, anschließend als neue Eingangswerte zum Einstellen des Betriebs des Motors verwendet werden.

**3.** Verfahren nach Anspruch 2, gemäß dem die Bestimmung der aktualisierten Werte der Fehlerparameter die folgende Schrittfolge enthält:

/i/ einen Messschritt, während dessen ein neuer Wert für jedes Merkmal des Betriebs des Motors gemessen wird;

/ii/ einen Vorhersageschritt, während dessen Schätzungen neuer aktualisierter Werte für die Fehlerparameter ausgehend von vorher für die Fehlerparameter erzeugten aktualisierten Werten erzeugt werden; und

/iii/ einen Aktualisierungsschritt, während dessen neue aktualisierte Werte der Fehlerparameter durch Kombination der im Schritt /ii/ erzeugten Schätzungen mit den im Schritt /i/ gemessenen neuen Werten erhalten werden.

4. Verfahren nach Anspruch 3, gemäß dem die aktualisierten Werte der Fehlerparameter unter Verwendung eines rekursiven Filters vom Kalman-Typ bestimmt werden, wobei die neuen aktualisierten Werte der Fehlerparameter bei jeder neuen Iteration ausgehend von den aktualisierten Werte der Fehlerparameter erhalten werden, die nur in der direkt vorhergehenden Iteration erhalten wurden, kombiniert mit den bei der neuen Iteration für die Betriebsmerkmale gemessenen Werten, und mit statistischen Daten, die bei der Iteration direkt vorher und bei der neuen Iteration berechnet wurden, unter Verwendung der Empfindlichkeitsmatrix.

5. Verfahren nach einem der vorhergehenden Ansprüche, gemäß dem die aktualisierten Werte der Fehlerparameter in einer Speichervorrichtung (7) mit nicht-flüchtigem und programmierbarem Speicher aufgezeichnet werden.

6. Verfahren nach den Ansprüchen 4 und 5, gemäß dem aktualisierte Werte von Kovarianzen, die den aktualisierten Werten der Fehlerparameter zugeordnet sind, mit den aktualisierten Werten der Fehlerparameter aufgezeichnet werden.

7. Verfahren nach einem der vorhergehenden Ansprüche, gemäß dem mindestens einer der Fehlerparameter, dessen aktualisierte Werte verwendet werden, um den Betrieb des Motors einzustellen, außerdem eine Verteilung von Ansaug- (23) und/oder Abgasventilen des Motors betrifft.

8. Verfahren nach einem der vorhergehenden Ansprüche, gemäß dem mindestens einer der Fehlerparameter, dessen aktualisierte Werte verwendet werden, um den Betrieb des Motors einzustellen, ausgewählt wird unter:

   - einem Öffnungsquerschnittsparameter einer Luftansaug-Drosselklappe (21) des Motors,
   - einer Einspritzdüse-Totzeit (22),
   - einem Einspritzdüse-Durchsatz (22),
   - einer Einspritzdüse-Verstärkung bezüglich einer Einspritzdruck-Abweichung (22),
   - einem variablen Öffnungswinkel der Ansaugventile (23) des Motors,

   - einem variablen Schließwinkel der Abgasventile (23) des Motors,
   - einem Stellgliedparameter, der geeignet ist, um einen Öffnungswinkel und/oder einen Hub der Ventile zu verändern, und
   - eine Verschiebung des Wirkungsquerschnitts eines Rückführungsventils (24) eines Teils der Abgase des Motors.

9. Verfahren nach einem der vorhergehenden Ansprüche, gemäß dem bestimmte der Fehlerparameter, deren aktualisierte Werte verwendet werden, um den Betrieb des Motors einzustellen, eine Verteilung von direkten Einspritzdüsen des Motors betreffen.

10. Verfahren nach einem der vorhergehenden Ansprüche, gemäß dem der Motor mit einem Turbokompressor versehen ist, wobei mindestens ein anderer der Fehlerparameter, deren aktualisierte Werte verwendet werden, um den Betrieb des Motors einzustellen, ein Parameter eines Ablassventils (25) des Turbokompressors ist.

11. Verfahren nach Anspruch 10, gemäß dem die Empfindlichkeitsmatrix geeignet ist, um die den Fehlerparametern zugeteilten Werte ausgehend von den jeweiligen Abweichungen mindestens eines von dem Krümmerdruck, dem Sauerstoffgehalt des Abgases und einem Ladedruck des Turbokompressors zu berechnen.

12. Verfahren nach einem der vorhergehenden Ansprüche, gemäß dem jeder gemessene reelle Wert ein Mittelwert mehrerer Ergebnisse von Messungen ist, die nacheinander während einer stabilen Betriebsperiode des Motors durchgeführt wurden.

13. Verfahren nach Anspruch 12, gemäß dem die Empfindlichkeitsmatrix ausgehend von digitalen Werten der für stabile Betriebe des Motors erhaltenen Betriebsmerkmale bestimmt wird.

14. Verfahren nach Anspruch 13, gemäß dem die aktualisierten Werte der Fehlerparameter als neue Eingangswerte verwendet werden, um den Betrieb des Motors einzustellen, wenn ein Wahrscheinlichkeitskriterium für die Betriebsmerkmale erfüllt ist, und wenn das Wahrscheinlichkeitskriterium nicht erfüllt ist, die aktualisierten Werte nicht als neue Eingangswerte zur Einstellung des Betriebs des Motors verwendet werden, und die Empfindlichkeitsmatrix neu bestimmt wird.

15. Steuersystem des Betriebs eines Fahrzeugmotors (1), das enthält:

   - eine Kontrolleinheit (3), die geeignet ist, um den Betrieb des Motors ausgehend von empfangenen Eingangswerten für Fehlerparameter eines Modells von Steuervorrichtungen des Motors einzustellen, das mindestens die Gas-und Kraftstoff-Ansaugsysteme enthält,

- eine Recheneinheit (5), die geeignet ist, um Werte der Fehlerparameter ausgehend von in der normalen Betriebsphase des Motors für mindestens zwei Betriebsmerkmale des Motors gemessenen Werten zu bestimmen, unter Verwendung einer Empfindlichkeitsmatrix, um den Fehlerparametern zugeteilte Werte ausgehend von einer Abweichung zwischen dem gemessenen Wert und einem Sollwert für jedes Betriebsmerkmal zu berechnen, wobei die Betriebsmerkmale mindestens eines von einem Krümmerdruck des Motors und einem Sauerstoffgehalt eines Abgases des Motors enthalten, und

- Kommunikationseinrichtungen (6), die geeignet sind, um an die Kontrolleinheit die von der Recheneinheit für die Fehlerparameter bestimmten Werte zu übertragen, um eine Aktualisierung der Eingangswerte zu erzeugen, die von der Kontrolleinheit für die Fehlerparameter verwendet werden,

wobei die Recheneinheit und die Kontrolleinheit geeignet sind, damit bestimmte der Fehlerparameter, deren aktualisierte Werte verwendet werden, um den Betrieb des Motors einzustellen, mindestens eines unter einer Gasansaug-Ventilöffnung (21) und Einspritzdüsen (22) des Motors betreffen.

16. System nach Anspruch 15, das geeignet ist, um ein Verfahren nach einem der Ansprüche 1 bis 14 durchzuführen.

17. Motorfahrzeug, das enthält:

- den Motor (1);
- Steuervorrichtungen (2) des Motors, die mindestens Gas- und Kraftstoff-Ansaugsysteme (20) enthalten;
- ein Steuersystem eines Betriebs des Motors (3, 5, 6), wobei das System dem Anspruch 15 oder 16 entspricht; und
- Messeinrichtungen (4), die geeignet sind, um gemessene Werte für die Betriebsmerkmale des Motors zu erzeugen.

**Claims**

1. Method of controlling the operation of a vehicle engine (1), wherein the operation of the engine is adjusted using respective input values for error parameters of a model (31) of control devices (2) of the engine, including at least a gas inlet circuit (20) and a fuel circuit,

the method including determination of updated values of the error parameters from respective values measured in a phase of normal operation of the engine for at least two characteristics of the operation of the engine, said operating characteristics including at least one of a manifold pressure of the engine and an oxygen content of an exhaust gas of said engine,

said determination being effected using a sensitivity matrix adapted to calculate values assigned to the error parameters from a difference between the measured value and a set point value for each operating characteristic,

the updated values of the error parameters being used as new input values for adjusting the operation of the engine,

in which method some of the error parameters the updated values of which are used to adjust the operation of the engine concern at least one of a gas inlet valve opening (21) and fuel injectors (22) of the engine.

2. Method according to Claim 1, wherein the determination of the updated values of the error parameters is repeated iteratively and after each iteration the updated values of the error parameters that have been determined in said iteration are then used as new input values for adjusting the operation of the engine.

3. Method according to Claim 2, wherein the determination of the updated values of the error parameters includes the following sequence of steps:

/i/ a measurement step, during which a new value is measured for each characteristic of the operation of the engine;

/ii/ a prediction step, during which estimates of respective new updated values are produced for the error parameters, from updated values produced previously for said error parameters; and

/iii/ an updating step, during which new updated values of the error parameters are obtained by combining the estimates produced in the step /ii/ with the new values measured in the step /i/.

4. Method according to Claim 3, wherein the updated values of the error parameters are determined using a recursive Kalman filter, the new updated values of the error parameters being obtained on each new iteration from updated values of said error parameters obtained exclusively in the immediately preceding iteration, combined with the values measured in said new iteration for the operating characteristics, and with statistical data calculated in said immediately preceding iteration and said new iteration, using the sensitivity matrix.

**5.** Method according to any one of the preceding claims, wherein the updated values of the error parameters are stored in a programmable non-volatile memory storage device (7).

**6.** Method according to Claims 4 and 5, wherein updated covariance values that are associated with the updated values of the error parameters are stored with said updated values of the error parameters.

**7.** Method according to any one of the preceding claims, wherein at least one of the error parameters the updated values of which are used to adjust the operation of the engine further concerns a distribution of inlet and/or outlet exhaust valves (23) of the engine.

**8.** Method according to any one of the preceding claims, wherein at least one of the error parameters the updated values of which are used to adjust the operation of the engine is selected from:

- an engine air inlet butterfly-valve (21) opening section parameter,
- a fuel injector (22) dead time,
- a fuel injector (22) flow rate,
- an injector (22) gain relative to an injection pressure difference,
- a variable opening angle of the inlet valve (23) of the engine,
- a variable closing angle of the exhaust valves (23) of the engine,
- an actuator parameter adapted to modify an opening angle and/or a lift travel of the valves, and
- an effective section offset of a valve (24) for recirculating a portion of the exhaust gases of the engine.

**9.** Method according to any one of the preceding claims, wherein some of the error parameters the updated values of which are used to adjust the operation of the engine concern a dispersion of direct fuel injectors of the engine.

**10.** Method according to any one of the preceding claims, wherein the engine is fitted with a turbocompressor, with at least one other error parameter the updated value(s) of which is or are used to adjust the operation of the engine that is a turbocompressor discharge valve (25) parameter.

**11.** Method according to Claim 10, wherein the sensitivity matrix is adapted to calculate the values assigned to the error parameters from respective differences of at least one of the manifold pressure, the exhaust gas oxygen content and a turbocompressor boost pressure.

**12.** Method according to any one of the preceding claims, wherein each measured real value is an average of a plurality of measurement results produced successively during a period of stable operation of the engine.

**13.** Method according to Claim 12, wherein the sensitivity matrix is determined from numerical values of the operating characteristics obtained for stable operation of the engine.

**14.** Method according to Claim 13, wherein the updated values of the error parameters are used as new input values for adjusting the operation of the engine if a criterion of likelihood is satisfied for the operating characteristics and if the criterion of likelihood is not satisfied then said updated values are not used as new input values for adjusting the operation of the engine and the sensitivity matrix is determined again.

**15.** System for controlling the operation of a vehicle engine (1), including:

- a control unit (3) adapted to adjust the operation of the engine on the basis of respective input values received for error parameters of a model of control devices of the engine including at least the gas and fuel inlet circuits,
- a calculation unit (5) adapted to determine respective values of the error parameters from respective values measured in a phase of normal operation of the engine for at least two characteristics of the operation of the engine, using a sensitivity matrix to calculate values assigned to the error parameters from a difference between the measured value and a set point value for each respective operating characteristic, said operating characteristics including at least one of a manifold pressure of the engine and an oxygen content of an exhaust gas of said engine, and
- communication means (6) adapted to transmit to the control unit the values determined by the calculation unit for the error parameters so as to produce an updating of the input values used by said control unit for said error parameters,

the calculation unit and the control unit being such that some of the error parameters the updated values of which are used to adjust the operation of the engine concern at least one of an opening of a gas inlet valve (21) and the fuel injector (22) of the engine.

**16.** System according to Claim 15, adapted to implement a method according to any one of Claims 1 to 14.

**17.** Vehicle with an engine including:

- the engine (1);
- control devices (2) of the engine, including at least gas and fuel inlet circuits (20);
- a system (3, 5, 6) for controlling operation of the engine, said system being as claimed in Claim 15 or 16; and
- measuring means (4) adapted to produce respective measured values for the operating characteristics of the engine.

FIG. 1

$$
\underbrace{
\begin{bmatrix}
S_{IVO\_Pcoll} & S_{IVO\_Rich} \\
0 & S_{T0\_Rich} \\
0 & S_{Kinjdp\_Rich} \\
S_{Apap\_Pcoll} & S_{Apap\_Rich} \\
\alpha_1 \cdot S_{Apap\_Pcoll} & \alpha_1 \cdot S_{Apap\_Rich} \\
\alpha_2 \cdot S_{Apap\_Pcoll} & \alpha_2 \cdot S_{Apap\_Rich} \\
\alpha_3 \cdot S_{Apap\_Pcoll} & \alpha_3 \cdot S_{Apap\_Rich} \\
S_{EVC\_Pcoll} & S_{EVC\_Pcoll}
\end{bmatrix}^t
}_{C^t}
\times
\underbrace{
\begin{bmatrix}
\delta IVO & \text{— IVO}\\
\delta T0 & \\
\delta Kdp & \text{— INJ}\\
\delta A0 & \text{— THR}\\
\delta A\alpha_1 & \\
\delta A\alpha_2 & \\
\delta A\alpha_3 & \\
\delta EVC & \text{— EVC}
\end{bmatrix}
}_{\substack{\text{PARAMETRES}\\\text{D'ERREURS}}}
=
\underbrace{
\begin{bmatrix}
\delta P_{coll} \\
\delta Rich
\end{bmatrix}
}_{\substack{\text{CARACTERISTIQUES}\\\text{DE FONCTIONNEMENT}}}
$$

**FIG. 2**

**EP 2 748 451 B1**

## RÉFÉRENCES CITÉES DANS LA DESCRIPTION

**Documents brevets cités dans la description**

- US 7021278 B
- EP 2221465 A